# EUROPÄISCHE PATENTSCHRIFT

(11) **EP 0 483 635 B1**
(45) Veröffentlichungstag und Bekanntmachung des Hinweises auf die Patenterteilung: **15.12.1993**
(21) Anmeldenummer: 91117934.9
(22) Anmeldetag: 21.10.1991
(51) Int. Cl.: F16L 3/22, F16L 3/13

(54) **Zweiteiliges Halteelement aus Kunststoff**
Plastic two piece retaining element
Elément de retenue en deux pièces en matière plastique

(30) Priorität: 30.10.1990 DE 4034545
(43) Veröffentlichungstag der Anmeldung: 06.05.1992
(73) Patentinhaber: TRW United-Carr GmbH & Co. KG, D-67677 Enkenbach-Alsenborn (DE)
(72) Erfinder: Rückwardt, Hans-Werner, W-6719 Eisenberg (DE)
(74) Vertreter: Schieschke, Klaus, Dipl.-Ing.

(56) Entgegenhaltungen:
- EP-A- 0 379 860
- FR-A- 2 596 489
- US-A- 4 655 424

## Beschreibung

Die Erfindung bezieht sich auf ein zweiteiliges Halteelement aus Kunststoff zur Halterung mindestens eines rohrförmigen Teils, mit einer an einem Träger über einen Haltebereich befestigbaren Außenschale aus hartem Material und einer darin eingesetzten Innenschale aus weichem Material, welche mindestens eine Lagerstelle zur Aufnahme des rohrförmigen Teils aufweist und in deren Bereich Freiarbeitungen vorgesehen sind, wobei die Innenschale im Bereich der Lagerstelle einen ringförmigen Bereich aufweist, welcher eine verkleinerte Einschuböffnung für das zu lagernde rohrförmige Teil besitzt.

Als Stand der Technik ist bereits ein derartiges, aus Kunststoff bestehendes, zweiteiliges Halteelement bekannt (DE-A-39 02 498). Hierbei weist die aus hartem Material bestehende Außenschale einen den Träger benachbarten, offenen Bereich auf, in welchem die mit entsprechenden Lagerstellen versehene Innenschale eingelagert ist. Diese Innenschale besitzt abgeschlossene Freiarbeitungen im Bereich der Lagerstellen, welche ihrerseits ringförmig ausgebildet und mit einer verkleinerten Einschuböffnung für das zu lagernder rohrförmige Teil versehen sind.

Durch diese Konstruktion ist nicht immer einwandfrei gewährleistet, daß von den rohrförmigen Teilen ausgehende Schwingungen nicht auf den Träger, beispielsweise die Karosserie eines Fahrzeuges, übertragen werden.

Weiterhin ist es bekannt, die rohrförmigen Teile über ihren Umfang durch weiche Elemente einzubetten, welche ihrerseits in der harten Außenschale eingelagert sind (DE-A-37 08 864, US 4 347 998 C2, EP-A-0 379 860). Darüber hinaus zählt es zum Stand der Technik, rohrförmige Teile lediglich zwischen zwei scharnierartig verbundenen Teilen einzusetzen (DE-GM 82 13 664.5), als Lagerung nur eine weiche Schale (FR-PS 2 596 489) oder nur eine harte Schale vorzusehen, deren Lagerbereiche halbschalenförmig gewölbt sind (US- 4 655 424 C2).

Demgegenüber liegt der vorliegenden Erfindung die Aufgabe zugrunde, ein zweiteiliges Halteelement nach dem Oberbegriff des Patentanspruchs 1 zu schaffen, bei welchem gewährleistet ist, daß über die rohrförmigen Teile keine Schwingungen auf einen Träger übertragen wird, an welchem das zweiteilige Halteelement befestigt ist.

Diese Aufgabe wird erfindungsgemäß dadurch gelöst, daß die Innenschale jeweils beidseitig der Lagerstelle über eine Verankerung an der Außenschale befestigt ist, wobei zwischen der Innenschale und der Außenschale eine durchgehende Freiarbeitung vorhanden ist, daß die Innenschale endseitig in Eingriffselemente der äußeren und inneren Verankerung übergeht, daß die Einschuböffnung beidseitig eine Verdickung aufweist und daß am Innenumfang des ringförmigen Bereichs eine der Einschuböffnung gegenüberliegende Rippe angeordnet ist.

Damit ist gewährleistet, daß die Lagerstellen der Innenschale, welche die rohrförmigen Teile lagern und aus weichem Material bestehen, sich infolge der durchgehenden Freiarbeitung ungehindert bewegen können. Die rohrförmigen Teile liegen im wesentlichen durch die Verdickungen und die Rippe punktförmig im Bereich der jeweiligen Lagerstelle, so daß vorteilhafterweise keine Schwingungen über die aus hartem Material bestehenden Außenschale auf den Träger übertragen werden.

Bei einem Halteelement, bei welchem der Haltebereich zwischen zwei Lagerstellen angeordnet ist, kann die Innenschale den Haltebereich übergreifen, wobei vier Verankerungen vorgesehen sein können, von welchen zwei Verankerungen oberhalb des Haltebereichs und zwei Verankerungen im Abstand seitlich neben dem Haltebereich angeordnet sind. Damit lagert jede Lagerstelle der Innenschale lediglich über zwei Verankerungen an der Außenschale, so daß hierdurch ebenfalls eine Übertragung unerwünschter Schwingungen auf einen Träger vermieden wird. Die Verankerungen können beispielsweise durch Nuten mit hinterschnittenen Endbereichen und entsprechende, mit den verdickten Endbereichen versehene Eingriffselemente gebildet sein. Hierbei können die beidseitig einer Lagerstelle angeordneten Verankerungen zwischen Innen- und Außenschale jeweils entgegengesetzt gerichtet sein.

In weiterer Ausgestaltung der Erfindung kann die Innenschale im Bereich der Lagerstelle jeweils U-förmig ausgebildet sein, wobei der Innenschenkel jeweils einen Teil des Haltebereichs bildet und der Außenschenkel einen verstärkten Bereich zur Aufnahme der äußeren Verankerung zwischen Innen- und Außenschale aufweist. Darüber hinaus kann der Haltebereich T-förmig ausgebildet sein, wobei der Querbalken in seinen beiden Endbereichen jeweils die inneren Verankerungen zwischen Außen- und Innenschale aufweist. Zur Verstärkung kann darüber hinaus zwischen dem Außenschenkel und dem verstärkten Bereich jeweils eine Rippe verlaufen.

Der Haltebereich der Außenschale kann in an sich bekannter Weise als Öffnung zur Bolzenaufnahme, als Halteclip oder aus Haltebolzen ausgebildet sein.

Die Erfindung wird nachfolgend anhand eines in der Zeichnung dargestellten Ausführungsbeispiels näher beschrieben. In der Zeichnung zeigen:
Fig. 1 eine Seitenansicht des zweiteiligen Halteelements
Fig. 2 eine Unteransicht auf das erfindungsgemäße Halteelement
Fig. 3 einen Schnitt gemäß der Linie III-III nach Fig. 2

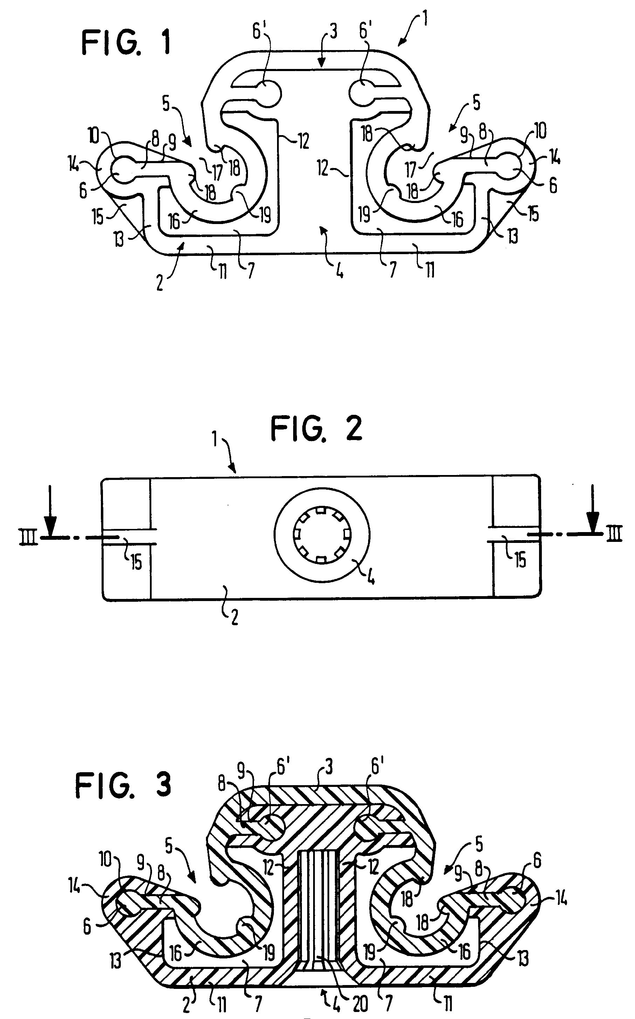

Das in den Figuren dargestellte Halteelement 1 besteht im wesentlichen aus einer Außenschale 2 aus hartem Kunststoffmaterial und einer Innenschale 3 aus weichem Kunststoffmaterial. Hierbei weist die Außenschale 2 einen Haltebereich 4 auf, wobei bei dem Ausführungsbeispiel nach Fig. 1 und 3 beidseitig des Haltebereichs 4 zwei Lagerstellen 5 angeordnet sind. Diese Lagerstellen 5 werden durch die Innenschale 3 gebildet.

Wie aus Fig. 1 und 3 ersichtlich, ist die Innenschale 3 jeweils beidseitig der betreffenden Lagerstelle 5 über eine Verankerung 6 bzw. 6' an der Außenschale 2 befestigt. Darüber hinaus ist zwischen der Innenschale 3 und der Außenschale 2 im Bereich der jeweiligen Lagerstelle 5 eine durchgehende Freiarbeitung 7 vorhanden.

Zwischen den beiden inneren Verankerungen 6 und 6' übergreift die Innenschale 3 den Haltebereich 4, wobei aus Fig. 1 und 3 ersichtlich ist, daß zwei Verankerungen 6' oberhalb des Haltebereichs 4 und zwei Verankerungen 6 im Abstand seitlich neben dem Haltebereich 4 angeordnet sind.

Die Verankerungen 6 bzw. 6' sind durch Nuten 9 mit hinterschnittenen Endbereichen 10 in der Außenschale 2 sowie durch entsprechende, mit verdickten Endbereichen versehene Eingriffselemente 8 in der Innenschale 3 gebildet.

Aus Fig. 1 und 3 ist ersichtlich, daß die beidseitig einer Lagerstelle 5 angeordneten Verankerungen 6 und 6' zwischen der Aussenschale 2 und der Innenschale 3 jeweils entgegengesetzt gerichtet sind; das bedeutet, daß die inneren Verankerungen 6' gegeneinander gerichtet sind, wohingegen die äußeren Verankerungen entgegengesetzt gerichtet sind.

Aus Fig. 1 und 3 ist erkennbar, daß die Außenschale 2 im Bereich der Lagerstelle 5 jeweils einen U-förmigen Bereich 11 aufweist. Dieser U-förmige Bereich 11 besitzt einen Innenschenkel 12, welcher jeweils einen Teil des Haltebereichs 4 bildet, sowie einen Außenschenkel 13. Dieser Außenschenkel 13 geht in einen verstärkten Bereich 14 zur Aufnahme der äußeren Verankerung 6 zwischen der Außenschale 2 und der Innenschale 3 über, wobei dieser äußere verstärkte Bereich 14 die Nuten 9 und die hinterschnittenen Endbereiche 10 der Verankerungen 6 aufweist.

Der mittlere Haltebereich 4 der Außenschale 2 ist T-förmig ausgebildet. Es ergibt sich damit ein Querbalken 15, welcher in seinen beiden Endbereichen jeweils die inneren Verankerungen 6' in Form von Nuten 9 mit hinterschnittenen Endbereichen 10 besitzt.

Zwischen dem Außenschenkel 13 des U-förmigen Bereichs 11 der Aussenschale 2 und dem verstärkten Bereich 14 verläuft jeweils eine Rippe 15, welche aus Verstärkung zwischen den Teilen 13 und 14 dient.

Aus Fig. 1 und 3 ist ersichtlich, daß die Innenschale 3 im Bereich der Lagerstelle 5 jeweils ringförmig ausgebildet ist, wobei der ringförmige Bereich 16 eine Einschuböffnung 17 für das zu lagernde, nicht näher dargestellte rohrförmige Teil aufweist. Endseitig geht dieser ringförmige Bereich 16 der Lagerstelle 15 der Innenschale 3 in die innere und äußere Verankerung 6, 6' über, d.h. in die beiden mit verdickten Endbereichen versehene Eingriffselemente 8. Weiterhin ist erkennbar, daß der ringförmige Bereich 16 beidseitig der Lagerstelle 5 eine die Einschuböffnung 17 verkleinernde Verdickung 18 aufweist, wobei außerdem am Innenumfang des ringförmigen Bereichs 17 eine der Einschuböffnung 17 gegenüberliegende Rippe 19 angeordnet sein kann. Damit läßt sich ein rohrförmiges Teil über die Verdickungen 18 in den Innenraum des ringförmigen Bereichs 16 der Lagerstelle 5 einclippen, wobei dann das Rohr lediglich an den beiden Verdickungen 18 und der Rippe 19 anliegt und damit eine punktuelle Lagerung gegeben ist. Das so in der Lagerstelle 5 der aus weichem Material bestehenden Innenschale 3 eingelagerte rohrförmige Teil hat infolge der Freiarbeitung 7 der Außenschale 2 keine Möglichkeit, unerwünschte Schwingungen auf einen Träger, beispielsweise eine Kraftfahrzeugkarosserie zu übertragen, so daß durch diese Konstruktion eine gute Dämpfung von unerwünschten Schwingungen gewährleistet ist. Der Haltebereich 4 der Außenschale 2 ist in Fig. 3 als Öffnung 20 mit längsverlaufenden Rippen dargestellt. Damit läßt sich die aus der Außenschale 2 und der Innenschale 3 bestehende Einheit beispielsweise auf einen an sich bekannten Sägezahnbolzen aufschlagen, welcher an einem nicht mehr dargestellten Träger befestigt ist. Statt der Öffnung 20 kann auch in an sich bekannter Weise als Halteelement ein Halteclip oder ein Profilbolzen eingesetzt werden (nicht näher dargestellt).

Die Verbindung zwischen der harten Außenschale 2 und der weichen Innenschale 3 kann beispielsweise mechanisch gegeben sein durch Einschieben der Innenschale 2 in die Außenschale 3 und Lagerung über die Verankerungen 6 und 6'. Diese Verankerungen können beispielsweise jedoch auch so gestaltet sein, daß die Innenschale 3 und die Außenschale 2 im Zwei-Komponenten-Spritzverfahren hergestellt wird, so daß bereits während der Herstellung eine Verbindung zwischen der weichen Innenschale 3 und der harten Außenschale 2 gewährleistet ist.

## Patentansprüche

1. Zweiteiliges Halteelement aus Kunststoff zur Halterung mindestens eines rohrförmigen Teils, mit einer an einem Träger über einen Haltebereich (4) befestigbaren Außenschale (2) aus hartem Material und einer darin eingesetzten Innenschale (3) aus weichem Material, welche mindestens eine Lagerstelle (5) zur Aufnahme des rohrförmigen Teils aufweist und in deren Bereich Freiarbeitungen vorgesehen sind, wobei die Innenschale (3) im Bereich der Lagerstelle (5) einen ringförmigen Bereich (16) aufweist, welcher eine verkleinerte Einschuböffnung (17) für das zu lagernde rohrförmige Teil besitzt,
dadurch gekennzeichnet,
daß die Innenschale (3) jeweils beidseitig der Lagerstelle (5) über eine Verankerung (6, 6') an der Außenschale (2) befestigt ist, wobei zwischen der Innenschale (3) und der Außenschale (2) jeweils eine durchgehende Freiarbeitung (7) vorhanden ist,
daß die Innenschale (3) endseitig in Eingriffselemente (8) der inneren und äußeren Verankerungen (6, 6') übergeht,
daß die Einschuböffnung (17) beidseitig eine Verdickung (18) aufweist und
daß am Innenumfang des ringförmigen Bereichs (16) eine der Einschuböffnung (17) gegenüberliegende Rippe (19) angeordnet ist.

2. Halteelement nach Anspruch 1, bei welchem der Haltebereich zwischen zwei Lagerstellen angeordnet ist,
dadurch gekennzeichnet,
daß die Innenschale (3) den Haltebereich (4) übergreift und vier Verankerungen (6, 6') vorgesehen sind, von welchen zwei Verankerungen (6') oberhalb des Haltebereiches (4) und vier Verankerungen (6) im Abstand seitlich neben dem Haltebereich (4) angeordnet sind.

3. Halteelement nach Anspruch 1 oder 2,
dadurch gekennzeichnet,
daß die Verankerungen (6, 6') durch Nuten (9) mit hinterschnittenen Endbereichen (10) und entsprechende, mit verdickten Endbereichen versehene Eingriffselemente (8) gebildet sind.

4. Halteelement nach Anspruch 1 oder 2 und 3,
dadurch gekennzeichnet,
daß die beidseitig einer Lagerstelle (5) angeordneten Verankerungen (6, 6') zwischen Außen- und Innenschale (2, 3) jeweils entgegengerichtet sind.

5. Halteelement nach einem der vorhergehenden Ansprüche,
dadurch gekennzeichnet,
daß die Außenschale (2) im Bereich der Lagerstelle (5) jeweils U-förmig (11) ausgebildet ist, wobei der Innenschenkel (12) jeweils einen Teil des Haltebereiches (4) bildet und der Außenschenkel (13) einen verstärkten Bereich (14) zur Aufnahme der äußeren Verankerung (6) zwischen Außen- und Innenschale (2, 3) aufweist.

6. Halteelement nach Anspruch 5, dadurch gekennzeichnet, daß der Haltebereich (4) T-förmig ausgebildet ist, wobei der Querbalken (15) in seinen beiden Endbereichen jeweils die inneren Verankerungen (6') zwischen Außen- und Innenschale (2, 3) aufweist.

7. Halteelement nach Anspruch 5, dadurch gekennzeichnet, daß zwischen dem Außenschenkel (13) und dem verstärkten Bereich (14) eine Rippe (15) verläuft.

8. Halteelement nach einem der vorhergehenden Ansprüche, dadurch gekennzeichnet, daß der Haltebereich (4) der Außenschale (2) in an sich bekannter Weise als Öffnung (20) zur Bolzenaufnahme, als Halteclip oder als Profilbolzen ausgebildet ist.

## Claims

1. Plastic two-piece retaining element for securing at least one tubular part, having an outer shell (2) of hard material, which can be fastened on a support by means of a retaining region (4), and an inner shell (3) of soft material, which is fitted in the said outer shell, has at least one bearing point (5) for receiving the tubular part and in the region of which reliefs are provided, the inner shell (3) having in the region of the bearing point (5) an annular region (16), which has a reduced push-in opening (17) for the tubular part to be mounted, characterised in that the inner shell (3) is fastened on the outer shell (2) on each of both sides of the bearing point (5) by means of an anchorage (6, 6'), there respectively being a clear-through relief (7) between the inner shell (3) and the outer shell (2), in that the inner shell (3) merges at the end with engaging elements (8) of the inner and outer anchorages (6, 6'), in that the push-in opening (17) has on both sides a thickening (18) and in that a rib (19) lying opposite the push-in opening (17) is arranged on the inner circumference of the annular region (16).

2. Retaining element according to Claim 1, in which the retaining region is arranged between two bearing points, characterised in that the inner shell (3) engages over the retaining region (4) and there are provided four anchorages (6, 6'), of which two anchorages (6') are arranged above the retaining region (4) and two anchorages (6) are arranged at a distance laterally alongside the retaining region (4).

3. Retaining element according to Claim 1 or 2, characterised in that the anchorages (6, 6') are formed by grooves (9) with undercut end regions (10) and by corresponding engaging elements (8), provided with thickened end regions.

4. Retaining element according to Claim 1 or 2 and 3, characterised in that the anchorages (6, 6'), arranged on both sides of a bearing point (5), are in each case opposed between outer and inner shell (2, 3).

5. Retaining element according to one of the preceding claims, characterised in that the outer shell (2) is in each case designed in a U shape (11) in the region of the bearing point (5), the inner leg (12) in each case forming a part of the retaining region (4) and the outer leg (13) having a reinforced region (14) for receiving the outer anchorage (6) between outer and inner shell (2, 3).

6. Retaining element according to Claim 5, characterised in that the retaining region (4) is designed in a T shape, the transverse bar (15) having in its two end regions in each case the inner anchorages (6') between outer and inner shell (2, 3).

7. Retaining element according to Claim 5, characterised in that a rib (15) runs between the outer leg (13) and the reinforced region (14).

8. Retaining element according to one of the preceding claims, characterised in that the retaining region (4) of the outer shell (2) is designed in a way known per se as an opening (20) for receiving a bolt, as a retaining clip or as a profiled bolt.

## Revendications

1. Elément de retenue en deux pièces en matière plastique, destiné à retenir au moins une pièce tubulaire, comprenant une coquille externe (2) en un matériau dur, pouvant être fixée à un support par l'intermédiaire d'une région de retenue (4), et une coquille interne (3) en un matériau tendre qui est introduite dans la coquille externe, est munie d'au moins une zone de montage (5) pour recevoir la pièce tubulaire, et dans la région de laquelle des dépouilles sont prévues, la coquille interne (3) présentant, au voisinage de la zone de montage (5), une zone annulaire (16) percée d'un orifice réduit (17) pour l'insertion de la pièce tubulaire à monter,
caractérisé par le fait
que la coquille interne (3) est respectivement fixée à la coquille externe (2) de part et d'autre de la zone de montage (5), par l'intermédiaire d'un système d'ancrage (6, 6'), une dépouille ininterrompue (7) étant respectivement ménagée entre la coquille interne (3) et la coquille externe (2) ;
que la coquille interne (3) fusionne, à ses extrémités, dans des éléments (8) de venue en prise des systèmes d'ancrage intérieurs et extérieurs (6, 6') ;
que l'orifice d'insertion (17) présente un renflement (18) de part et d'autre ; et
qu'une nervure (19), située à l'opposé de l'orifice d'insertion (17), est disposée sur le pourtour interne de la zone annulaire (16).

2. Elément de retenue selon la revendication 1, dans lequel la région de retenue est interposée entre deux zones de montage,
caractérisé par le fait
que la coquille interne (3) coiffe la région de retenue (4), et l'on a prévu quatre systèmes d'ancrage (6, 6') parmi lesquels deux systèmes d'ancrage (6') se trouvent au-dessus de la région de retenue (4), et quatre systèmes d'ancrage (6) jouxtent latéralement et à distance la région de retenue (4).

3. Elément de retenue selon la revendication 1 ou 2,
caractérisé par le fait
que les systèmes d'ancrage (6, 6') sont formés par des gorges (9) à régions extrêmes dépouillées (10), et par des éléments correspondants (8) de venue en prise qui sont pourvus de régions extrêmes épaissies.

4. Elément de retenue selon la revendication 1 ou 2 et 3,
caractérisé par le fait
que les systèmes d'ancrage (6, 6'), situés de part et d'autre d'une zone de montage (5), sont respectivement tournés à l'opposé entre les coquilles externe et interne (2, 3).

5. Elément de retenue selon l'une des revendications précédentes,
caractérisé par le fait
que la coquille externe (2) est respectivement réalisée de configuration en U (11) dans la region de la zone de montage (5), la branche intérieure (12) formant respectivement une partie de la région de retenue (4), et la branche extérieure (13) présentant une zone renforcée (14) pour recevoir le système d'ancrage extérieur (6) entre les coquilles externe et interne (2, 3).

6. Elément de retenue selon la revendication 5, caractérisé par le fait que la région de retenue (4) est réalisée de configuration en T, la membrure transversale (15) présentant respectivement, dans ses deux régions extrêmes, les systèmes d'ancrage intérieurs (6') entre les coquilles externe et interne (2, 3).

7. Elément de retenue selon la revendication 5, caractérisé par le fait qu'une nervure (15) s'étend entre la branche extérieure (13) et la zone renforcée (14).

8. Elément de retenue selon l'une des revendications précédentes, caractérisé par le fait que la région de retenue (4) de la coquille externe (2) est réalisée, de manière connue par elle-même, sous la forme d'une ouverture (20) pour recevoir un tenon, sous la forme d'un clip de retenue ou sous la forme d'un tenon profilé.
